# EUROPÄISCHE PATENTSCHRIFT

(11) **EP 3 467 898 B1**
(45) Veröffentlichungstag und Bekanntmachung des Hinweises auf die Patenterteilung: **15.07.2020**
(21) Anmeldenummer: 18209760.0
(22) Anmeldetag: 14.10.2011
(51) Int. Cl.: H01M 2/02, H01M 2/38, H01M 10/42

(54) **AKKUMULATOR MIT EINEM WANDELEMENT UND WANDELEMENT DAFÜR**
BATTERY HAVING A WALL ELEMENT, AND WALL ELEMENT FOR SAME
ACCUMULATEUR DOTÉ D'UN ÉLÉMENT PAROI ET ÉLÉMENT PAROI CORRESPONDANT

(30) Priorität: 09.03.2011 DE 202011003713 U; 15.10.2010 DE 102010048428
(43) Veröffentlichungstag der Anmeldung: 10.04.2019
(62) Teilanmeldung aus: 11773191.9
(73) Patentinhaber: Clarios Germany GmbH & Co. KGaA, 30419 Hannover (DE)
(72) Erfinder: BREMER, Dirk, 31535 Neustadt (DE); STREUER, Peter, 30559 Hannover (DE)
(74) Vertreter: Trinks, Ole

(56) Entgegenhaltungen:
- WO-A2-2011/029035
- US-A- 5 096 787

## Beschreibung

Die Erfindung betrifft einen Akkumulator mit einem Wandelement gemäß den Merkmalen des Oberbegriffs des Anspruchs 1. Die Erfindung betrifft ferner ein Wandelement für einen solchen Akkumulator gemäß dem Anspruch 2 sowie ein Akkumulatorgehäuse dafür gemäß dem Anspruch 3.

Gattungsgemäße Akkumulatoren sind beispielsweise aus der DE 10 2007 061 662 A1, US 4,963,444 A oder US 5,096,787 A bekannt.

Die zum Stand der Technik nach Artikel 54(3) EPÜ gehörende Druckschrift WO 2011/029035 A2 betrifft eine Sekundärbatterie mit verbesserter Säureendschichtung. Zu diesem Zweck wird ein Mischelement vorgeschlagen, welches geeignet ist, den in der Sekundärbatterie enthaltenen Elektrolyten zu durchmischen.

Das Wandelement dient dazu, den Elektrolyten soweit zu durchmischen, dass eine Säureschichtung aufgehoben oder zumindest deutlich reduziert wird.

Die Aufgabe der vorliegenden Erfindung besteht darin, einen Akkumulator anzugeben, bei dem das Wandelement gegenüber den bekannten Lösungen noch weiter funktionsoptimiert ist. Ferner besteht die Aufgabe der Erfindung darin, hierfür ein geeignetes, verbessertes Wandelement und ein Akkumulatorgehäuse dafür anzugeben.

Diese Aufgabe wird durch die in den Ansprüchen angegebene Erfindung gelöst. Kennzeichnend sind hierfür eines oder mehrere der nachfolgend angegebenen bzw. in den Zeichnungen erkennbaren Merkmale.

Soweit von den Begriffen "oben" und "unten" Gebrauch gemacht wird, beziehen sich diese Angaben auf die spezifikationsgemäße Betriebslage des Akkumulators, d. h. eine im Wesentlichen horizontale Lage, bei der der Akkumulator- Deckel sowie dessen Einfüllöffnungen für den flüssigen Elektrolyten obenliegend sind. Bei einer üblichen, spezifikationsgemäßen Bewegungsbeanspruchung ist eine gewisse Abweichung von der Horizontallage zulässig, wie es z. B. beim Betrieb eines Ackumulators in einem Kraftfahrzeug auftritt. Nicht spezifikationsgemäße Betriebslagen sind beispielsweise um 90° oder 180° gegenüber der Horizontallage gedrehte Lagen.

Die Zeichnungen zeigen:
- Figur 1: ein Akkumulatorgehäuse eines sechszelligen Akkumulators in perspektivischer Darstellung und
- Figur 2: das Akkumulatorgehäuse gemäß Figur 1 in einer Seitenansicht in geschnittener Darstellung und
- Figuren 3 und 4: eine seitliche Teilansicht des Akkumulatorgehäuses im Schnitt
- Figur 5: ein Wandelement in Dreiseitenansicht und
- Figur 6: Details des Wandelements und
- Figur 7: weitere Details eines Wandelements und

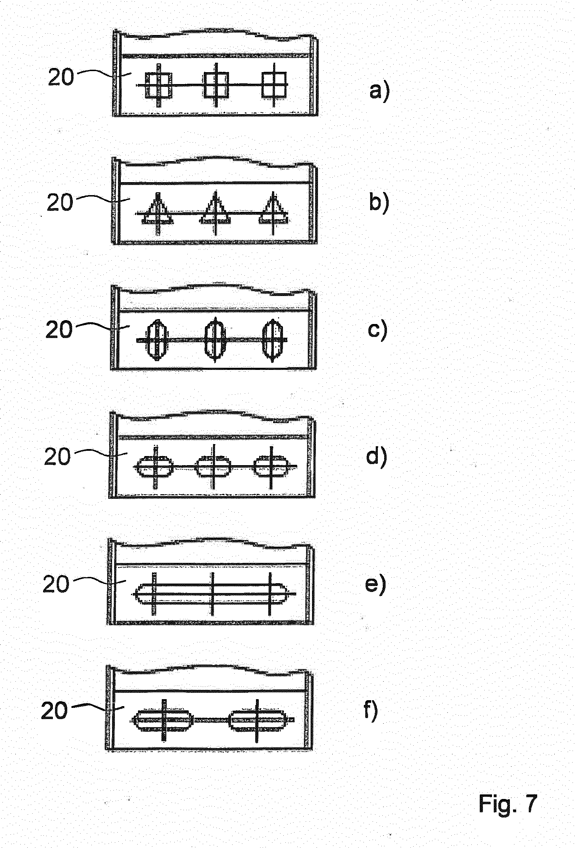

- Figuren 7 bis 15: weitere Ausführungsformen eines Wandelements und

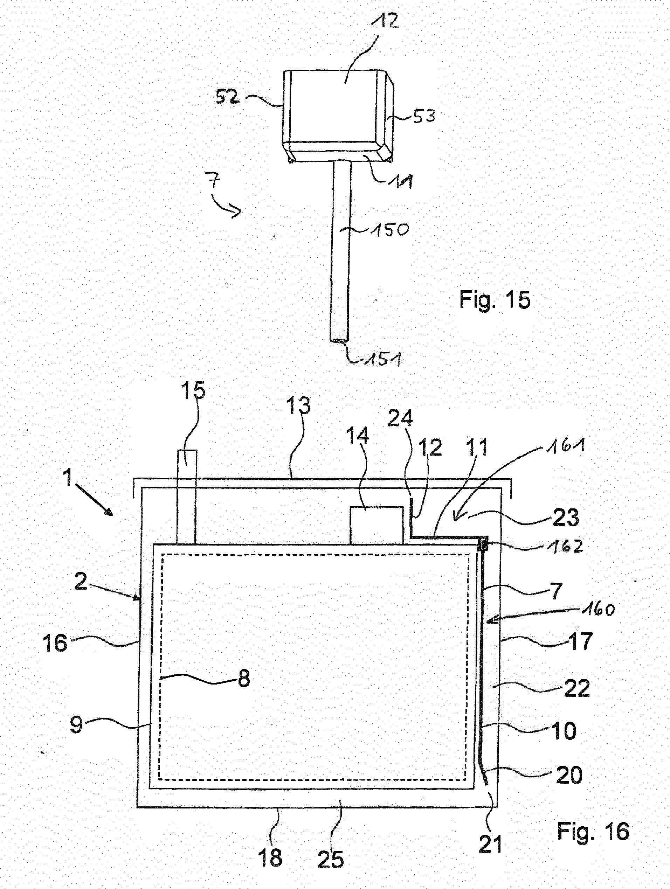

- Figuren 16 bis 18: weitere Ausführungsform eines Akkumulatorgehäuses inschnittener Darstellung und

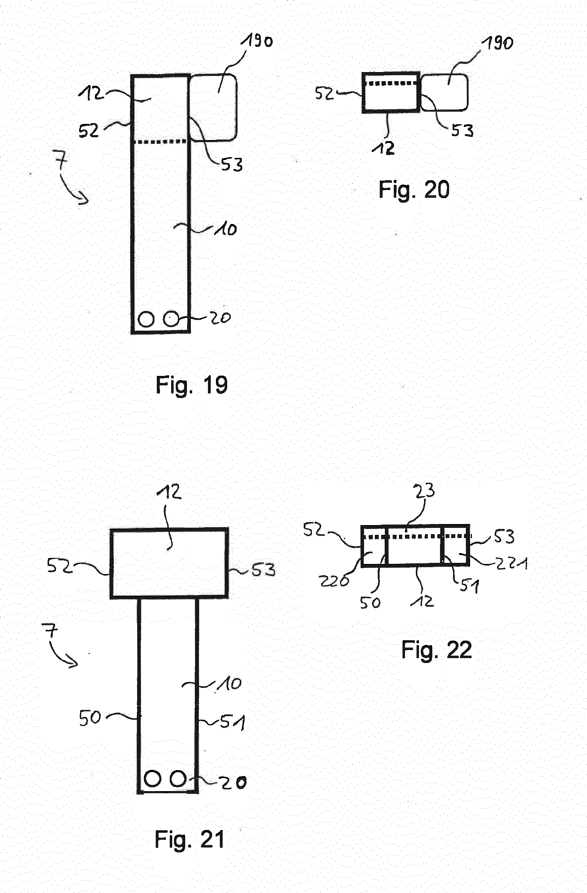

- Figuren 19 bis 49: weitere Ausführungsformen eines Wandelements.

In den Figuren werden gleiche Bezugszeichen für einander entsprechende Elemente verwendet. Nicht sichtbare Kanten sind in den Figuren durch gestrichelte oder punktierte Linien wiedergegeben.

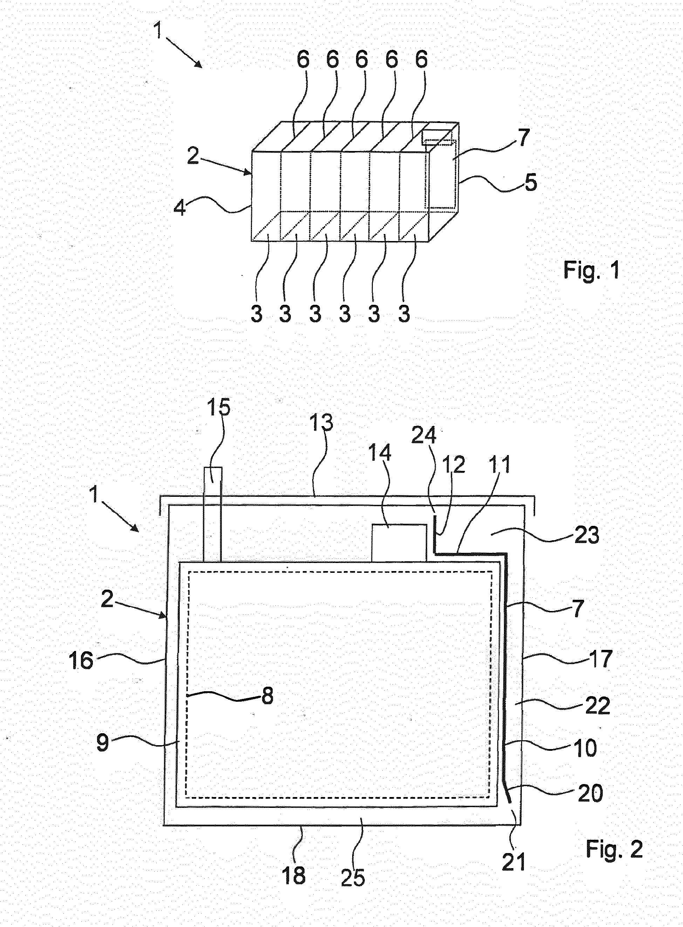

Unter gleichzeitiger Bezugnahme auf die Figuren 1 und 2 wird zunächst der grundsätzliche Aufbau eines sechszelligen Akkumulators erläutert.

Ein Akkumulator 1 weist ein Akkumulatorgehäuse 2 auf, das im dargestellten Beispiel sechs Zellräume 3 aufweist. Die Zellräume 3 sind gegeneinander durch Zwischenwände 6 des Akkumulatorgehäuses 2 abgedichtet. Das Akkumulatorgehäuse 2 weist als äußere Wände eine linke und eine rechte Seitenwand 4, 5, eine Vorderwand 16 und eine Rückwand 17 auf. An der Unterseite weist das Akkumulatorgehäuse 2 eine untere Wand 18 in Form eines Bodens auf. Der Boden 18 kann verstärkt ausgebildet sein. Der Boden 18 dient als Auflagefläche des Akkumulators bei seiner Montage z. B. in einem Fahrzeug. Das Akkumulatorgehäuse 2 wird mit einem Deckelteil 13 verschlossen, das nur in der Figur 2 schematisch angedeutet ist. Das Deckelteil 13 ist in der Praxis z. B. als Doppeldeckel mit einem darin angeordneten Labyrinth ausgebildet. Die Figur 1 zeigt das Akkumulatorgehäuse ohne das Deckelteil 13, so dass ein im Inneren des rechten Zellraums 3 dargestelltes Wandelement 7 erkennbar ist.

In einem Zellraum 3 sind Elektrodenplatten 8, die jeweils von einem taschen-förmigen Separator 9 umschlossen und gegeneinander isoliert sind, angeordnet. Die Separatoren 9 sind daher etwas überlappend gegenüber den Elektrodenplatten 8 ausgebildet. Beispielhaft ist in der Figur 2 noch ein äußerer Anschluss 15 in Form eines Batteriepols des Akkumulators 1 sowie ein interner Zellverbinder 14, der zur Verbindung zwischen den Elektroden verschiedener Zellräume dient, dargestellt.

Wie ferner erkennbar ist, ist das Wandelement 7 aus einem oberen Trennwandabschnitt 12, der im Wesentlichen vertikal verläuft, einem unteren Trennwandabschnitt 10, der ebenfalls im Wesentlichen vertikal verläuft, sowie einem im Wesentlichen horizontal verlaufenden, den oberen und den unteren Trenn-wandabschnitt 10, 12 verbindenden mittleren Trennwandabschnitt 1 1 gebildet. Das Wandelement 7 kann sich aufgrund seiner Formgebung gut in einen Zwischenraum zwischen der Rückwand 17 und den Separatoren 9 im unteren Bereich sowie in den Freiraum zwischen der Rückwand 17 und dem Zellverbinder 14 einschmiegen und den hier zur Verfügung stehenden Platz gut ausnutzen.

Durch das Wandelement 7 wird im oberen Bereich ein Speicherraum 23 und im unteren Bereich ein Durchgangskanal 22 gebildet, der einen geringeren horizontalen Querschnitt aufweist als der Speicherraum 23. Oberhalb des Wandelements 7 ist eine Druckausgleichsverbindung 24 vorgesehen, die zum Luftaustausch dient. Unterhalb des Wandelements 7 ist eine kommunizierende Verbindung 21 vorgesehen, über die der durch den Speicherraum 23 und den Durchgangskanal 22 gebildete eine Volumenraum mit einem jenseits der Durchgangsöffnung 21 vorhandenen weiteren Volumenraum 25 verbunden ist. Auf diese Weise sind der Volumenraum 23, 22 einerseits und der Volumen-räum 25 andererseits als miteinander kommunizierende Volumenräume in der Art von kommunizierenden Röhren ausgebildet.

Der untere Trennwandabschnitt 10 endet mit der Einführschräge 20, die als gegenüber dem unteren Trennwandabschnitt 10 abgewinkelter Wandabschnitt ausgeführt sein kann, der von den Elektroden 8 und Separatoren 9 des Zellraums 3 fort abgewinkelt ist.

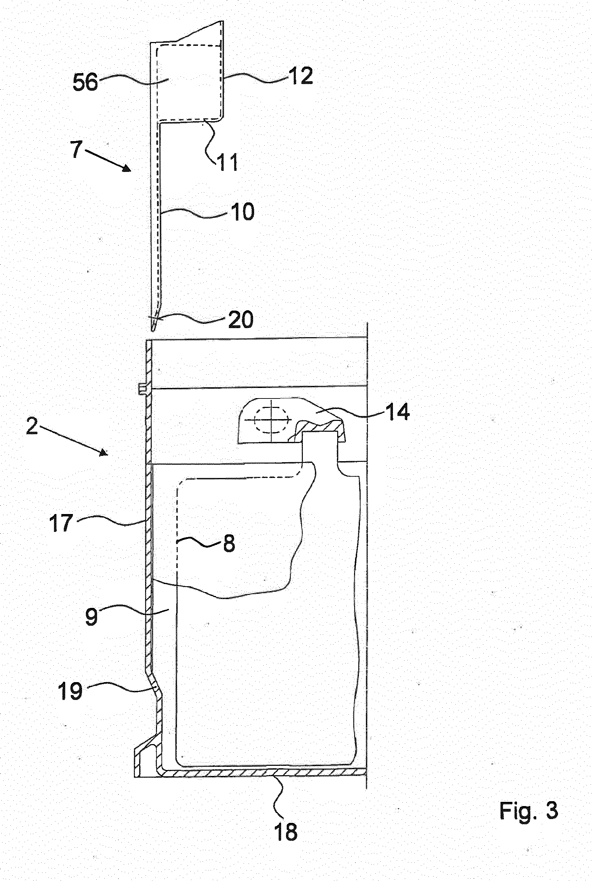

Die Figur 3 zeigt einen Ausschnitt des Akkumulatorgehäuses 2 in Schnittdarstellung, wobei nur die für die Erläuterung des Wandelements 7 erforderlichen Bereiche dargestellt sind. Die Figur 3 zeigt hierbei das Wandelement 7 vor dem Einstecken in das Akkumulatorgehäuse 2.

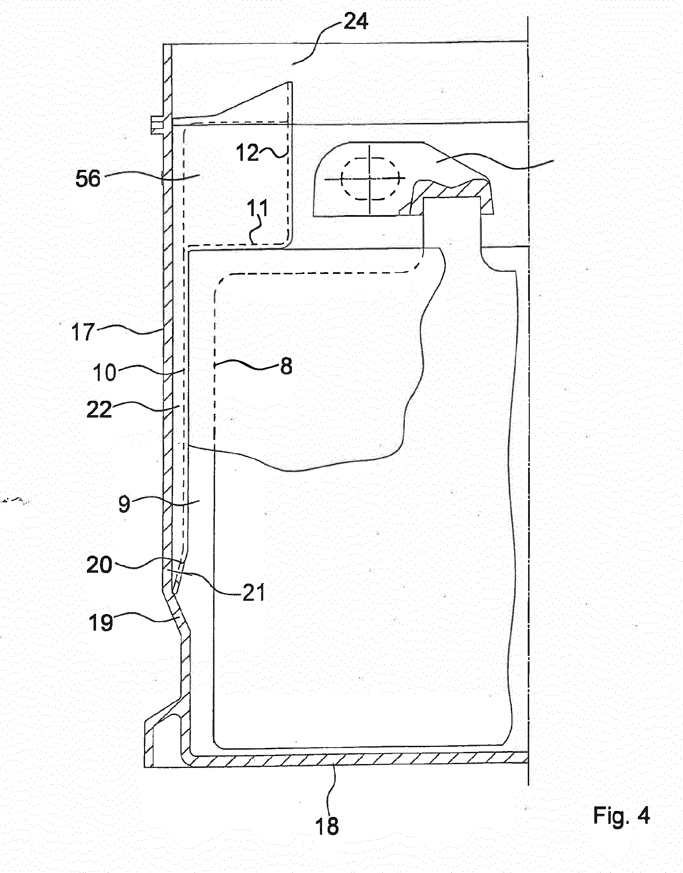

Die Figur 4 zeigt den gleichen Ausschnitt wie Figur 3, jedoch mit bereits bis zu seiner Endposition eingeschobenem Wandelement 7. Wie erkennbar ist, weist das Akkumulatorgehäuse 2 an der Rückwand 17 eine Einschnürung 19 auf, d. h. einen abgeschrägten Teil, unterhalb dessen sich die horizontale Querschnittsfläche des Akkumulatorgehäuses 2 verringert. Die Einschnürung 19 dient zugleich als Endposition für den beim Einstecken vorangehenden Wandabschnitt, d.h. für die Vorderseite der Einführschräge 20.

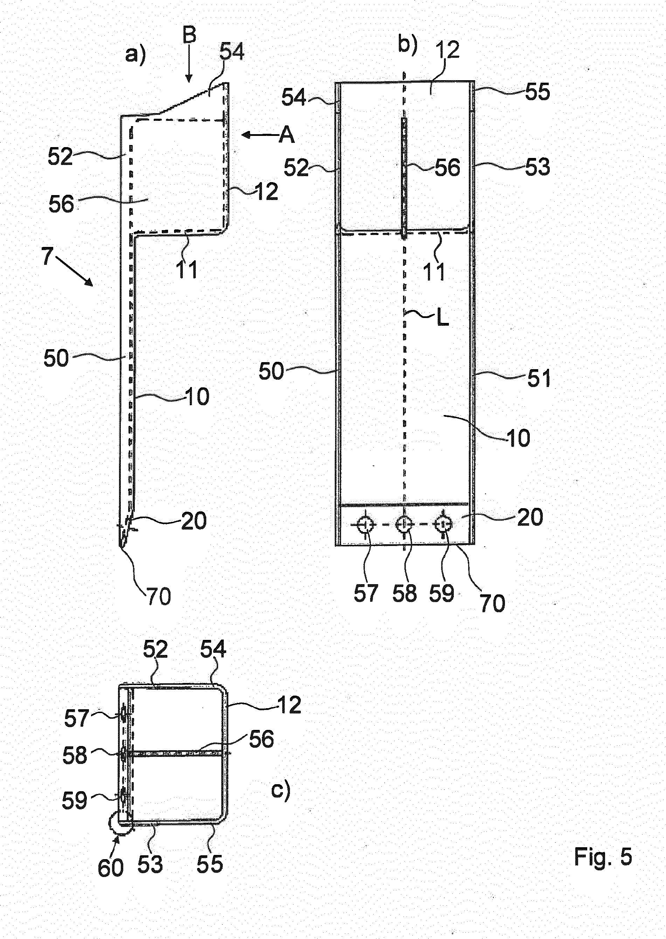

Erkennbar ist in den Figuren 3 und 4 zudem ein Montagehilfselement 56, das ebenso wie weitere Merkmale des Wandelements 7 anhand der Figur 5 noch näher erläutert wird.

Ein vorteilhaftes Verfahren zum Einsetzen des Wandelements 7 sieht vor, dass das Wandelement 7 für die Montage an dem Montagehilfselement 56 manuell oder durch einen Montageroboter gefasst und leicht gekippt und parallel an der Innenseite der Rückwand 17 entlang mit der Einführschräge 20 voran eingeschoben wird. Hierbei liegt ein spitzer Winkel zwischen der Rückwand 17 und dem Wandelement 7 vor. Sobald die Einführschräge 20 in den Raum zwischen den Separatoren 9 und der Rückwand 17 eingeschoben ist, wird das Wandelement vertikal ausgerichtet und bis in seine Endposition eingeschoben, d. h. bis die Einführschräge 20 die Einschnürung 19 des Akkumulatorgehäuses 2 erreicht.

Die Figur 5 zeigt das Wandelement gemäß den Figuren 3 und 4 in einer Dreiseitenansicht. Die Figur 5a zeigt das Wandelement in seitlicher Ansicht, die Figur 5b in Frontansicht, d. h. in Betrachtungsrichtung A, und die Figur 5c in einer Ansicht von oben, d. h. in Betrachtungsrichtung B.

Wie erkennbar ist, weist das Wandelement 7 das Montagehilfselement 56 in Form einer etwa in der Mitte entlang einer Längsachse L des Wandelements 7 ausgerichteten Wand auf. Das Montagehilfselement 56 bildet hiermit eine Art Zwischenwand oder Spant.

Ferner ist erkennbar, dass das Wandelement 7 im unteren Endbereich des unteren Trennwandabschnitts 10 eine Einführschräge 20 aufweist, die sich in etwa linear rampenartig zum Ende des Wandelements 7 hin verjüngt.

Das Wandelement 7 weist zusätzlich Seitenwände 50, 51, 52, 53, 54, 55 auf, die sich etwa parallel, bezogen auf die Lage nach dem Einstecken des Wandelements 7 in das Akkumulatorgehäuse 2, zu den Zwischenwänden 6 bzw. den linken und rechten Seitenwänden 4, 5 des Akkumulatorgehäuses 2 erstrecken. Im oberen Bereich des Wandelements 7 sind die Seitenwände 52, 53 mit zusätzlichen, in Richtung des oberen Trennwandabschnitts 12 in etwa linear nach oben verlaufend gebildeten Seitenwandabschnitten 54, 55 ausgebildet. Die Seitenwände 50, 51 im unteren Trennwandabschnitt 10 dienen zugleich als Abstandshalteelemente, durch die gewährleistet wird, dass ein von den Separatoren 9 auf den unteren Trennwandabschnitt 10 ausgeübter Druck nicht zu einem unerwünschten Verringern des Durchlassquerschnitts des Durchgangskanals 22 führt.

Wie ferner erkennbar ist, weist das Wandelement 7 im Bereich der Einführschräge 20 Öffnungen 57, 58, 59 auf, z. B. wie in Figur 5b dargestellt drei Öffnungen. Die Öffnungen 57, 58, 59 bilden den Durchgangskanal 21.

Wie in der Figur 5c zudem durch den eingekreisten Bereich 60 angedeutet wird, können die Seitenwände 50, 51, 52, 53 eine besondere Gestaltung zur Abdichtung zwischen den kommunizierenden Volumenräumen aufweisen.

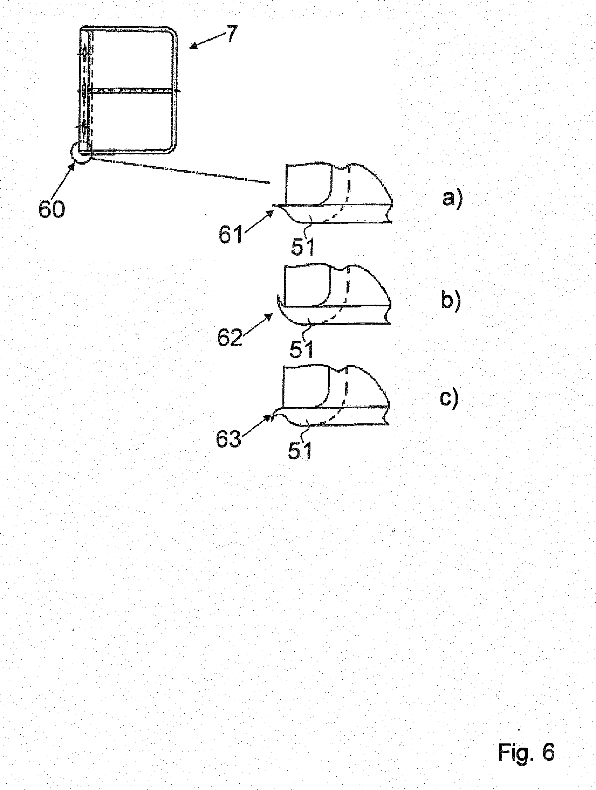

In der Figur 6 sind vorteilhafte Ausgestaltungen für diese Abdichtung anhand von Ausschnittsvergrößerungen des eingekreisten Bereichs 60 dargestellt. Die Abdichtung kann in Form einer an die Seitenwände angeformten Dichtlippe ausgebildet sein, wie in den Figuren 6a, b und c beispielhaft anhand der Sei-tenwand 51 wiedergegeben. Die Figur 6a zeigt eine gerade abstehende Dichtlippe 61, die im eingebauten Zustand des Wandelements in Richtung der Rückwand 17 gerichtet ist. Die Figur 6b zeigt eine nach innen zum Durchgangskanal 22 hin gerichtete Dichtlippe 62, die Figur 6c zeigt eine nach außen vom Durchgangskanal 22 fort gerichtete Dichtlippe 63.

Die Figur 7 zeigt anhand eines Ausschnitts des Wandelements 7, der im Wesentlichen nur den Bereich der Einführschräge 20 zeigt, verschiedene Ausgestaltungen der Öffnungen 57, 58, 59, die als Durchgangsöffnung 21 fungieren. Neben der schon anhand der Figur 5b dargestellten kreisrunden Form können die Öffnungen auch quadratisch oder rechteckig (Figur 7a), dreieckig (Figur 7b), oval in verschiedenen Ausrichtungen (Figuren 7c und d), in Form eines oder mehrerer länglicher Schlitze (Figur 7e) oder auch in Form zweier oder mehrerer länglicher oder ovaler Schlitze (Figur 7f) ausgebildet sein. Auch jegliche Kombination solcher Ausgestaltungen kann vorteilhaft vorgesehen werden. Als günstig hat sich die Verwendung von drei Öffnungen herausgestellt, je nach Ausgestaltung können aber auch mehr oder weniger Öffnungen vorgesehen werden. Die beschriebenen Ausführungsformen der Öffnungen können auch, anders als in Figur 7 ausdrücklich dargestellt, um einen gewissen Winkel gedreht oder schräg gestellt ausgeführt sein, z. B. um 45° oder 180° gedreht.

Gemäß einer vorteilhaften Ausgestaltung weist der Akkumulator ein Wandelement 7 auf, das als ein in einen Zellraum 3 einsteckbares, separates Bauteil ausgebildet ist. Dies hat den Vorteil, dass das Wandelement separat hergestellt werden kann und bei Bedarf in den Zellraum eines Akkumulators eingesteckt werden kann. Auf diese Weise können auf kostengünstige Weise sowohl Akkumulatoren mit dem Wandelement als auch ohne das Wandelement hergestellt werden, ohne dass unterschiedliche Spritzgussformen für die Herstellung der Gehäuseteile der zwei Varianten erforderlich wären, wie dies bei einem fest angeformten Wandelement erforderlich wäre. Zudem können auch Akkumulatoren aus bisheriger Serienfertigung in einfacher Weise, d. h. ohne große Aufwendungen bezüglich der Herstellungseinrichtungen, umgestellt werden auf Akkumulatoren mit integrierter Durchmischungseinrichtung in Form des Wandelements.

Gemäß einer vorteilhaften Ausgestaltung ist vorgesehen, dass das Wandelement im beim Einstecken des Wandelements 7 vorangehenden Wandabschnitt einen als Einführschräge 20 ausgebildeten Bereich aufweist, in dem ein an dem beim Einstecken vorangehenden Ende 70 angeordneter Wandabschnitt des Wandelements 7 schräg zu den Elektroden 8 und Separatoren 9 des Zellraums 3 verläuft. Der schräg verlaufende Wandabschnitt kann z.B. in einem Winkel im Bereich von 5 bis 60 Grad zum Rand der Elektroden und Separatoren des Zellraums verlaufen. In diesem Bereich verjüngt sich das Wandelement zu seinem beim Einstecken vorangehenden Ende hin, und zwar von den Elektroden und Separatoren des Zellraums fort. Durch eine solche Einführschräge können unerwünschte Beschädigungen der Separatoren und der Elektroden vermieden werden. Es wurde festgestellt, dass bei modernen Akkumulatoren die zur Trennung der positiven von der negativen Elektrode vorgesehenen Separatoren (auch Scheider genannt) in vielen Fällen, z. B. aus fertigungstechnischen Gründen, über die eigentlichen Elektroden seitlich hinaus stehen können. Die im Einführbereich sozusagen im Weg stehenden Elemente werden durch die Einführschräge sanft zur Seite gedrückt und bleiben unbeschädigt. Die Einführschräge kann in Einführrichtung geradlinig, gewölbt oder abgewinkelt verlaufen. Bei geradem Verlauf ergibt sich eine rampenartige Verjüngung des als Ei führschräge ausgebildeten Bereichs.

Das beschriebene Wandelement kann hinsichtlich seiner Höhe, d. h. seiner Längserstreckung, so ausgebildet sein, dass sich ein zyklischer Umlauf des Elektrolyten bei Bewegungsbeanspruchung des Akkumulators derart ergibt, dass Elektrolyt über die Oberkante des Wandelements hinüberschwappt und über die untere, kommunizierende Verbindung wieder abläuft, wie z. B. in US 5,096,787 beschrieben. In diesem Fall hat das Wandelement die Funktion einer hydrostatischen Pumpe.

Gemäß einer vorteilhaften Ausgestaltung ist vorgesehen, dass sich das Wandelement 7 mindestens so weit nach oben erstreckt, dass bei spezifikationsgemäßer Bewegungsbeanspruchung des Akkumulators 1, wie sie z. B. bei einem fahrenden Fahrzeug auftritt, ein Überfließen von flüssigem Elektrolyten zwischen den zwei miteinander kommunizierenden Volumenräumen 22, 23, 25 über die Oberkante des Wandelements 7 verhindert ist. Hierdurch kann vorteilhaft das Prinzip von kommunizierenden Röhren realisiert werden. Es wird eine Hin- und Herbewegung des Elektrolyten über die kommunizierende Verbindung im unteren Bereich der Volumenräume erzwungen und nicht, wie beim Prinzip der hydrostatischen Pumpe, ein Umwälzen des Elektrolyten. Dies hat den Vorteil, dass am Boden des Akkumulators angesammelter Schlamm dort bleibt, da keine Umwälzung des Elektrolyten erfolgt. Die hierdurch erzwungene Elektrolytbewegung ist ausreichend, um den Elektrolyten soweit zu durchmischen, dass eine Säureschichtung aufgehoben oder zumindest deutlich reduziert wird.

Die kommunizierende Verbindung im unteren Bereich der Volumenräume, durch den der flüssige Elektrolyt hindurchströmen kann, kann auf unterschiedliche Weise ausgestaltet sein, z. B. durch einen Spalt zwischen dem Ende des Wandelements und der benachbarten Wand des Zellraums oder dem Boden des Akkumulatorgehäuses. Gemäß der Erfindung sind eine oder mehrere Öffnungen 57, 58, 59 im unteren Bereich des Wandelements 7 vorgesehen, durch die Elektrolyt zwischen den zwei miteinander kommunizierenden Volumenräumen 22, 23, 25 hin und her strömen kann.

Gemäß einer weiteren Ausgestaltung der Erfindung weist der die Einführschräge 20 aufweisende Wandabschnitt eine oder mehrere Öffnungen 57, 58, 59 auf, durch die Elektrolyt zwischen den zwei miteinander kommunizierenden Volumenräumen 22, 23, 25 hin und her strömen kann. Die Öffnungen in der Einführschräge sind zusätzlich oder alternativ zu den zuvor erwähnten Öffnungen im unteren Bereich des Wandelements vorgesehen.

Erfindungsgemäß sind eine, mehrere oder alle Öffnungen 57, 58, 59 als Durchbrüche im Wandelement 7 ausgebildet, die vom Material des Wandelements 7 umgrenzt sind. Dies hat den Vorteil, dass durch die Öffnungen die Wirkung der Einführschräge nicht nachteilig beeinflusst wird, insbesondere die Funktion, durch die Einführschräge die im Weg stehenden Teile sanft zur Seite zu drücken, ohne die Separatoren zu beschädigen.

Gemäß einer vorteilhaften Ausgestaltung weist der beim Einstecken des Wandelements 7 vorangehende Wandabschnitt eine gerade oder konvexe Kontur 70 auf. Dies ist ebenfalls vorteilhaft für ein sanftes Einstecken des Wand-elements und zur Vermeidung von Beschädigungen an den Separatoren.

Gemäß einer vorteilhaften Ausgestaltung weist das Wandelement 7 einen unteren Trennwandabschnitt 10 und einen oberen Trennwandabschnitt 12 sowie einen im Wesentlichen horizontal verlaufenden mittleren Trennwandabschnitt 1 1 auf, der den unteren Trennwandabschnitt 10 mit dem oberen Trennwandabschnitt 12 dicht verbindet, wobei im in einen Zellraum 3 eingesteckten Zustand des Wandelements 7 der obere, der mittlere und der untere Trennwandabschnitt 10, 11 , 12 eine Trennwand zwischen den zwei miteinander kommunizierenden Volumenräumen 22, 23, 25 bilden. Die Trennwandabschnitte bilden eine Trennwand zwischen den zwei miteinander kommunizierenden Volumenräumen, d. h. sie unterteilen den Zellraum in die wenigstens zwei Volumenräume. Der obere Trennwandabschnitt kann dabei direkt an den unteren Trennwandabschnitt angrenzen und dicht damit verbunden sein. Gemäß einer vorteilhaften Ausgestaltung sind die Trennwandabschnitt derart angeordnet, dass das Wandelement im in den Zellraum eingesteckten Zustand durch den unteren Trennwandabschnitt einen Durchgangskanal für den Elektrolyten bildet und durch den oberen Trennwandabschnitt einen Speicherraum für den Elektrolyten bildet. Der Speicherraum weist im Mittel eine größere horizontale Querschnittsfläche auf als der Durchgangskanal. So kann beispielsweise der obere Trennwandabschnitt gegenüber dem unteren Trennwandabschnitt abgewinkelt angeordnet sein und stärker in Richtung der Elektroden ausgerichtet sein als der untere Trennwandabschnitt. Hierdurch kann sich im Speicherraum eine größere Menge Elektrolyt sammeln, während der schmaler ausgebildete Durchgangskanal für eine erhöhte Strömungsgeschwindigkeit des hindurchströmenden Elektrolyten sorgt.

Gemäß einer vorteilhaften Ausgestaltung weist das Wandelement einen unteren Trennwandabschnitt und einen oberen Trennwandabschnitt sowie einen bezogen auf die Einbauposition im Akkumulator im Wesentlichen horizontal verlaufenden mittleren Trennwandabschnitt auf. Der mittlere Trennwandabschnitt verbindet den unteren Trennwandabschnitt mit dem oberen Trennwand-abschnitt dicht. Im in einen Zellraum eingesteckten Zustand des Wandelements bilden der obere, der mittlere und der untere Trennwandabschnitt eine Trennwand zwischen den zwei miteinander kommunizierenden Volumenräumen. Durch die Anordnung eines im Wesentlichen horizontal verlaufenden mittleren Trennwandabschnitts kann das zur Verfügung stehende Volumen des Speicherraums maximiert werden. Es kann im Wesentlichen der vollständige, zur Verfügung stehende Raum oberhalb der Elektroden bis hin zum Deckel des Akkumulators für den Speicherraum ausgenutzt werden. Gemäß einer vorteilhaften Ausgestaltung sind der untere Trennwandabschnitt und der obere Trennwandabschnitt im Wesentlichen vertikal verlaufend, bezogen auf die Einbauposition im Akkumulator.

Das Wandelement kann in dem Akkumulator unlösbar befestigt werden, z. B. durch Verkleben oder Verschweißen mit Wänden des Akkumulatorgehäuses. Gemäß einer vorteilhaften Ausgestaltung ist das Wandelement 7 mittels einer Steckfestigung lösbar in einem Zellraum 3 befestigbar. Dies hat den Vorteil, dass die Montage des Wandelements in dem Akkumulator sehr schnell und mit wenigen Arbeitsschritten erfolgen kann. Insbesondere ist keine Wartezeit erforderlich, die zum Trocknen eines Klebers notwendig wäre. Auch kann ein gesonderter Arbeitsschritt zum Verschweißen oder sonstigen Verbinden eingespart werden. Die Steckbefestigung kann z. B. als Klemmbefestigung ausgebildet sein, derart, dass das Wandelement durch Reibkräfte in dem Zellraum gehalten ist. Die Steckbefestigung kann auch eine Verrastung oder Verriegelung aufweisen, wobei vorteilhaft die im Bereich der Kunststofftechnik üblichen Verrastungs- oder Verriegelungselemente verwendet werden können.

Gemäß einer vorteilhaften Ausgestaltung weist wenigstens ein Wandbereich 50, 51, 52, 53 des Wandelements 7, der zur Anlage an einer Begrenzungswand 17 des Zellraums 3 vorgesehen ist, eine angeformte Dichtlippe 61, 62, 63 zur Abdichtung zwischen den zwei miteinander kommunizierenden Volumenräumen 22, 23, 25 auf. Dies hat den Vorteil, dass mit einfachen und kostengünstigen Mitteln eine abgedichtete Trennung zwischen den miteinander kommunizierenden Volumenräumen realisiert werden kann. Es sind insbesondere keine gesonderten Dichtelemente vorzusehen, was die Herstellung und Montage des Wandelements vereinfacht.

Gemäß einer vorteilhaften Ausgestaltung weist das Wandelement 7 im oberen Bereich ein angeformtes Montagehilfselement 56 auf, das zum Greifen des Wandelements 7 durch eine automatische Fertigungseinrichtung ausgebildet ist. Das Montagehilfselement kann z. B. als Zapfen oder als Zwischenwand, z. B. nach Art eines Spants, an einem oberen Trennwandabschnitt des Wandelements angeformt sein. Das Montagehilfselement hat den Vorteil, dass eine einfache und schnelle automatische Bestückung von Akkumulatoren mit derartigen Wandelementen ermöglicht wird. Auch eine manuelle Bestückung wird durch das Montagehilfselement vereinfacht. Durch das Montagehilfselement kann das Wandelement sicher geführt und präzise platziert eingesetzt werden.

Gemäß einer vorteilhaften Ausgestaltung sind alle beim Einstecken des Wandelements 7 an den Separatoren 9 entlang gleitenden Kanten des Wandelements 7 abgerundet. Sofern der Akkumulator Separatoren aufweist, die gegenüber den Elektroden hervorstehen, und zwar bis in den Einführbereich des Wandelements, unterstützten die abgerundeten Kanten vorteilhaft das Einführen des Wandelements und vermeiden Beschädigungen der Separatoren.

Gemäß einer vorteilhaften Ausgestaltung entspricht die Breite des Wandelements der Innenbreite eines Zellraums.

Gemäß einer vorteilhaften Ausgestaltung weist das Wandelement 7 wenigstens einen Trennwandabschnitt 10, 11 , 12 auf, der sich von einer Begrenzungswand 4, 5, 6 des Zellraums 3 zu einer gegenüberliegenden Begrenzungswand 4, 5, 6 des Zellraums 3 erstreckt und eine Trennwand zwischen den zwei miteinander kommunizierenden Volumenräumen 22, 23, 25 bildet, und das Wandelement 7 Seitenwände 50, 51 , 52, 53, 54, 55 aufweist, die im eingesteckten Zustand des Wandelements 7 an den Begrenzungswänden 4, 5, 6 des Zellraums 3 flächig anliegen. Die Seitenwände erlauben eine sichere Steckbefestigung des Wandelements durch Reibung bei zugleich guter Abdichtung zwischen den miteinander kommunizierenden Volumenräumen.

Gemäß einer vorteilhaften Ausgestaltung verringert sich die Längserstreckung der Seitenwände 54, 55 in Längsrichtung L des Wandelements 7 von dem Trennwandabschnitt 12 fort. Hierdurch kann auf effiziente und kostengünstige Weise einerseits eine Verhinderung des Überschwappens des Elektrolyten ü-ber die Oberkante des Wandelements vermieden werden und zugleich eine Druckausgleichsverbindung zwischen den Volumenräumen realisiert werden. Gemäß einer vorteilhaften Ausgestaltung erstreckt sich der Trennwandabschnitt an der Oberseite des Wandelements bis hin zu einem Deckelteil des Akkumulators. Bei aufgesetztem Deckelteil stößt damit der Trennwandabschnitt an das Deckelteil an, was den Vorteil hat, dass das Wandelement zusätzlich durch das Deckelteil in seiner Position gehalten werden kann.

Gemäß einer vorteilhaften Ausgestaltung weist das Wandelement wenigstens einen Trennwandabschnitt 10 auf, der eine Trennwand zwischen den zwei miteinander kommunizierenden Volumenräumen 22, 23, 25 bildet, und das Wand-element 7 wenigstens im unteren Bereich wenigstens ein angeformtes Abstandshalteelement 50, 51 aufweist, das im eingesteckten Zustand des Wandelements 7 zwischen dem Trennwandabschnitt 10 und einer dem Trennwandabschnitt 10 gegenüberliegenden Begrenzungswand 17 des Zellraums 3 angeordnet ist, wobei durch das Abstandshalteelement 50, 51 im eingesteckten Zu-stand des Wandelements 7 der Trennwandabschnitt 10 entgegen der auf den Trennwandabschnitt 10 einwirkenden Kraft von über die Elektroden 8 überstehenden Separatoren 9 in einem Abstand von der gegenüberliegenden Begrenzungswand 17 des Zellraums 3 gehalten ist. Dies hat den Vorteil, dass durch das Abstandshalteelement die kommunizierende Verbindung zwischen den Volumenräumen offengehalten werden kann und nicht durch gegebenenfalls hohe Presskräfte der Separatoren in unerwünschter Weise verengt oder geschlossen wird. Vorteilhaft können auch mehrere Abstandselemente vorgesehen sein, z. B. in Form von seitlich am Wandelement vorgesehenen Abstandsrippen, die z. B. in Form von Seitenwänden ausgebildet sein können. Hierdurch wird ein immer gleich groß bleibender Durchgangskanal für den Säureaustausch beibehalten.

Gemäß einer vorteilhaften Ausgestaltung ist das Wandelement, wie z. B. auch das Akkumulatorgehäuse, aus Polypropylen oder einem anderen geeigneten Material, das flexibel und säurebeständig ist, hergestellt.

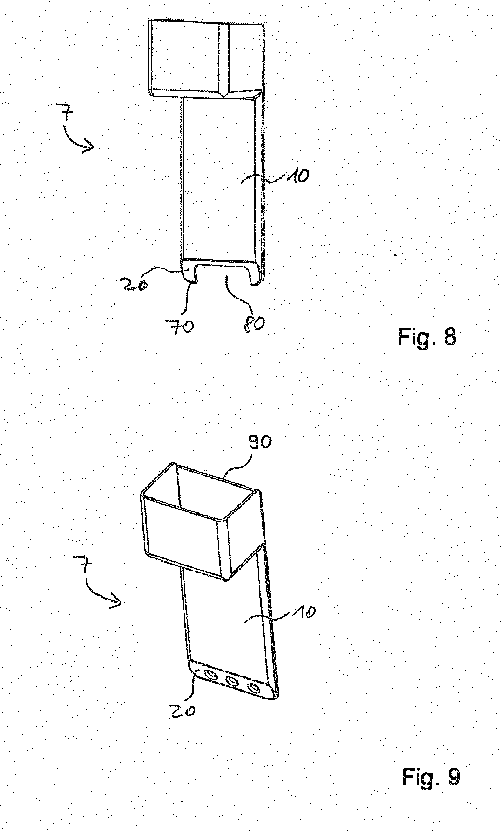

Die Figur 8 zeigt eine vorteilhafte Ausgestaltung eines Wandelements 7, bei dem der untere Bereich, in dem die kommunizierende Verbindung 21 zwischen den Volumenräumen 22, 25 gebildet wird, eine ausgeschnittene Öffnung 80 aufweist. Die Öffnung 80 ist nicht, wie z. B. anhand der Figur 7 beschrieben, als vollständig vom Material des Wandelements 7 umgebene Öffnung ausgebildet, sondern wenigstens einseitig offen. Die ausgeschnittene Öffnung 80 ist weist z. B. beim in das Akkumulatorgehäuse 2 eingesetzten Wandelement 7 nach unten. Die ausgeschnittene Öffnung 80 kann z. B. in dem als Einführschräge 20 ausgebildeten Bereich angeordnet sein.

Das Wandelement 7 kann auch im unteren Bereich der Seitenwände 50, 51 Öffnungen der zuvor beschriebenen Art aufweisen, z. B. Öffnungen nach Art der Öffnungen 57, 58, 59 oder der ausgeschnittenen Öffnung 80.

Die Figur 9 zeigt eine vorteilhafte Ausgestaltung eines Wandelements 7, das zusätzlich eine Rückwand 90 aufweist. Im Übrigen entspricht das dargestellte Wandelement 7 der Ausführung gemäß Figur 5. Durch die Rückwand können auch rückseitig geschlossene Volumenräume 22, 23 geschaffen werden, so dass das Wandelement 7 nicht unbedingt an einer Innen- oder Außenwand 4, 5, 6, 16, 17 des Akkumulatorgehäuses anliegend angeordnet werden muss. Ein Wandelement gemäß Figur 9 mit der Rückwand 90 kann z. B. als Blasteil hergestellt werden.

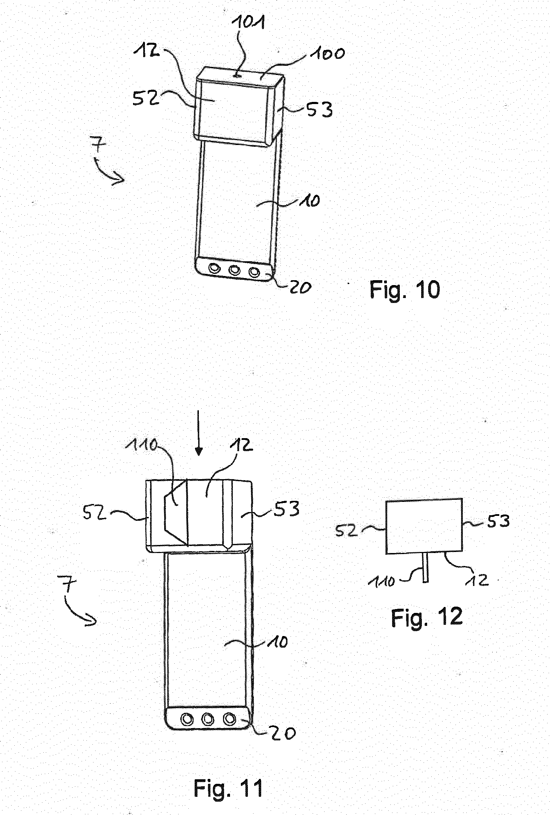

Die Figur 10 zeigt eine vorteilhafte Ausgestaltung eines Wandelements 7, bei dem an der Oberseite des Volumenraums 23 ein Deckel 100 angeordnet ist, der das Wandelement 7 von oben verschließt. Der Deckel 100 weist zur Herstellung einer Druckausgleichsverbindung eine Öffnung 101 auf. Das Wandelement 7 gemäß Figur 10 entspricht ansonsten dem Wandelement gemäß Figur 5.

Die Figur 11 zeigt eine vorteilhafte Ausgestaltung eines Wandelements 7, bei dem an der Außenseite, d. h. an der zum Volumenraum 25 gewandten Seite, in dem sich die Elektroden 8 befinden, ein Halteelement 110 angeformt ist, das von dem oberen Trennwandabschnitt 12 absteht, z. B. in etwa rechtem Winkel oder ggf. auch in einem anderen Winkel. Die Figur 12 zeigt das Wandelement 7 gemäß Figur 11 in einer Ansicht von oben, d. h. in Richtung des in Figur 11 dargestellten Pfeils. Das Halteelement 110 kann, vergleichbar mit dem Montagehilfselement 56, als Montagehilfe beim Einstecken des Wandelements 7 in das Akkumulatorgehäuse 2 dienen.

Es kann sowohl ein innen liegendes Montagehilfselement 56 als auch ein außenliegendes Halteelement 110 an einem Wandelement 7 vorgesehen sein.

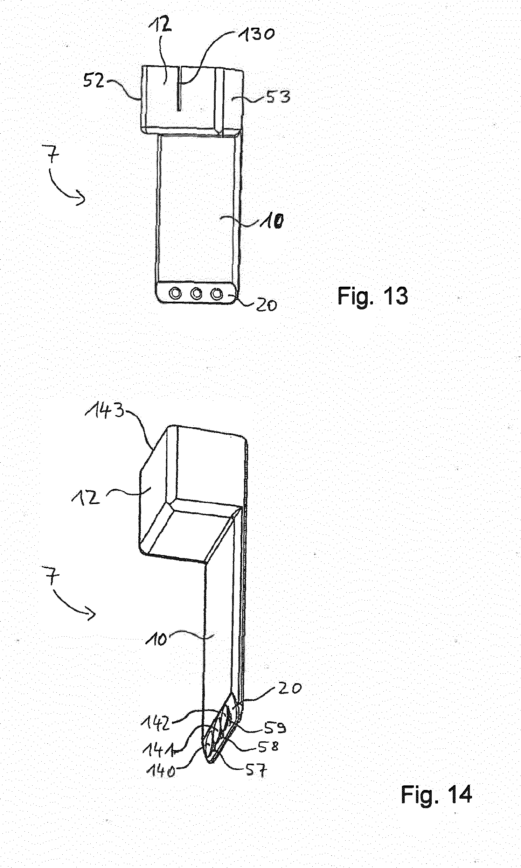

Die Figur 13 zeigt eine vorteilhafte Ausgestaltung eines Wandelements 7, bei dem der obere Trennwandabschnitt 12 eine Öffnung 130 aufweist. Die Öffnung 130 kann z. B. als Schlitz ausgebildet sein. Der Schlitz kann von der Oberkante des oberen Trennwandabschnitts 12 bis in einen tiefer liegenden Bereich des oberen Trennwandabschnitts 12 verlaufen. Es kann auch eine Öffnung, rund, schlitzförmig oder anders geformt, vorgesehen sein, die unterhalb der Oberkante des oberen Trennwandabschnitts 12 beginnt. Selbstverständlich können auch mehrere Öffnungen vorgesehen sein, beispielsweise in ähnlicher Form wie die Öffnungen 57, 58, 59 im unteren Trennwandabschnitt 10. Durch die Öffnung 130 im oberen Trennwandabschnitt 12 wird ein definiertes Überströmen von flüssigen Elektrolyten über das Wandelement 7 bereits etwas früher, d. h. schon bei geringerem Elektrolytstand, zugelassen.

Die Figur 14 zeigt eine vorteilhafte Ausgestaltung eines Wandelements 7, das Ventilklappen 140, 141, 142 jeweils an den Öffnungen 57, 58, 59 aufweist. Die Ventilklappen 140, 141, 142 sind nach Art eines Rückschlagventils ausgebildet. Bei einer Elektrolyt-Strömung von dem Volumenraum 22 in den Volumenraum 25 durch die Öffnungen 57, 58, 59 öffnen die Ventilklappen 140, 141, 142, bei einer entgegengesetzten Strömung schließen die Ventilklappen 140, 141, 142. Bei geschlossenen Ventilklappen 140, 141, 142 kann Elektrolyt in die Volumenräume 22, 23 durch ein Überfließen über die Oberkante 24 des oberen Trennwandabschnitts 12 gelangen, oder durch die anhand der Figur 13 erläuterte Öffnung 130.

Alternativ oder zusätzlich können auch Ventilklappen und zugehörige Öffnungen an anderen Stellen des Wandelements 7 vorgesehen sein, z. B. in dem unteren Trennwandabschnitt 10, in dem mittleren Trennwandabschnitt 1 1 oder in Seitenwänden 50, 51, 52, 53, und zwar in einer oder mehreren Seitenwänden.

Die Ventilklappen können auch in umgekehrter Richtung wirken, d. h. auf der zu den Volumenräumen 22, 23 gerichteten Seite des Wandelements 7 angeordnet sein. In diesem Fall erlauben die Ventilklappen ein Einströmen von flüssigen Elektrolyten in die Volumenräume 22, 23 durch die im unteren Bereich der Volumenräume vorgesehene kommunizierende Verbindung 21, jedoch nicht in umgekehrter Richtung aus den Volumenräumen 22, 23 heraus. Ein Ausfließen der Elektrolyten aus den Volumenräumen 22, 23 erfolgt dann über die Oberkante 24 des oberen Trennwandabschnitts 12 oder eine Öffnung 130, wie anhand der Figur 13 beschrieben.

Der untere Volumenraum 23, der gemäß den zuvor beschriebenen Ausgestaltungen des Wandelements 7 in Form eines Kanals mit etwa rechteckförmigem Querschnitt ausgebildet ist, kann auch beliebige andere Formen aufweisen, insbesondere auch andere Durchmesser und Querschnitte als der Querschnitt, der durch das obere Trennwandelement 12 sowie die Seitenwände 52, 53 gebildet wird. So kann sich unten an den mittleren Trennwandabschnitt 1 1 z. B. ein rohrförmiger Kanal 150 anschließen, wie in der Figur 15 dargestellt. Der rohrförmige Kanal 150 endet mit einer Öffnung 151, die die kommunizierende Verbindung 21 zwischen den Volumenräumen bildet. Der rohrförmige Kanal 150 kann auch weitere Öffnungen aufweisen, ggf. auch in einer Wand vorgesehene radiale Öffnungen.

Die Figur 16 zeigt eine vorteilhafte Ausgestaltung eines Akkumulators 1, die bis auf die nachfolgend genannten besonderen Merkmale der Ausführungsform gemäß Figur 2 entspricht. Das zuvor einstückig beschriebene Wandelement 7 ist gemäß Figur 16 mehrteilig ausgebildet, z.B. als oberes Trennwandteil 161 und als unteres Trennwandteil 160. Das untere Wandteil 160 weist den unteren Trennwandabschnitt 10 und ggf. die Einführschräge 20 auf. Das untere Trennwandteil 160 ist dabei fest in dem Akkumulatorgehäuse 2 angeordnet, z. B. einstückig im Herstellprozess des Akkumulatorgehäuses 2 mit diesem hergestellt. Das obere Trennwandteil 161 weist den zuvor beschriebenen oberen Trennwandabschnitt 12 und den mittleren Trennwandabschnitt 11 auf. Das obere Trennwandteil 161 ist als Aufsteckteil ausgebildet, das von oben auf das untere Trennwandteil 160 aufgesteckt wird. Hierfür weist das obere Trennwandteil 161 Schnappelemente 162 auf, durch die das obere Trennwandteil 161 nach Art einer Schnappverbindung auf das untere Trennwandteil 160 aufgesetzt werden kann. Vorteilhaft erfolgt das Aufsetzen des oberen Trennwandteils 161 erst nach Anbringung der Elektroden 8 und Separatoren 9 in dem Akkumulatorgehäuse 2. Die Schnappelemente 162 können alternativ auch an dem unteren Trennwandteil 160 vorgesehen sein.

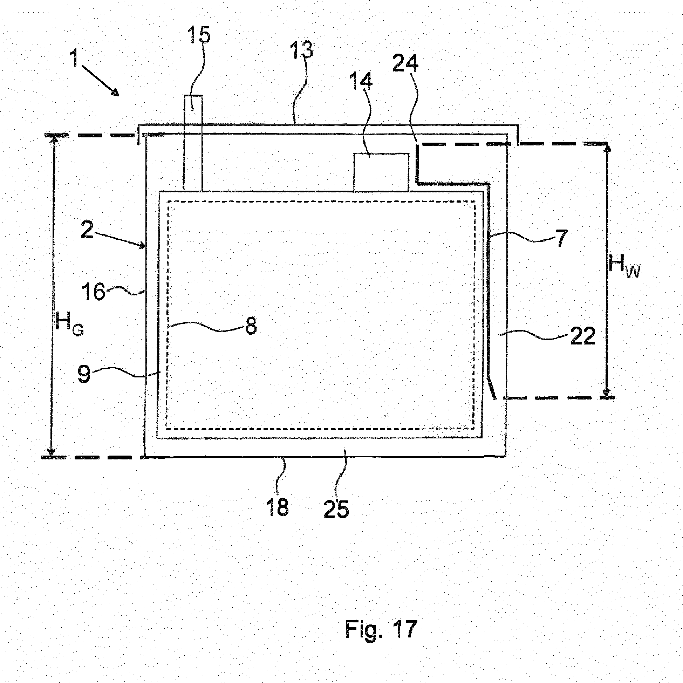

Die Figur 17 zeigt einen Akkumulator 1 in vergleichbarer Darstellung wie Figur 2. Gemäß einer vorteilhaften Ausgestaltung weist die Bauhöhe Hw des Wandelements 7, d. h. dessen größte Längenerstreckung, vorteilhafte Werte in Bezug auf die Bauhöhe HG des Akkumulatorgehäuses 2 (ohne Deckelteil 13) auf. In einer ersten vorteilhaften Ausgestaltung liegt das Verhältnis von Hw zu HG im Bereich von 40 bis 80 %. In einer zweiten vorteilhaften Ausgestaltung liegt das Verhältnis von Hw zu HG im Bereich von 60 bis 80 %, in einer dritten vorteilhaften Ausgestaltung liegt das Verhältnis von Hw zu HG im Bereich von 70 bis 78 %. Hierdurch kann eine besonders hohe Effizienz beim Durchmischen des Elektrolyten durch das Wandelement 7 erzielt werden. Ein weiterer Vorteil ist, dass eine Aufwirbelung von Schmutzpartikeln vom Boden des Akkumulatorgehäuses 2, wie z.B. Bleipartikel, verhindert wird.

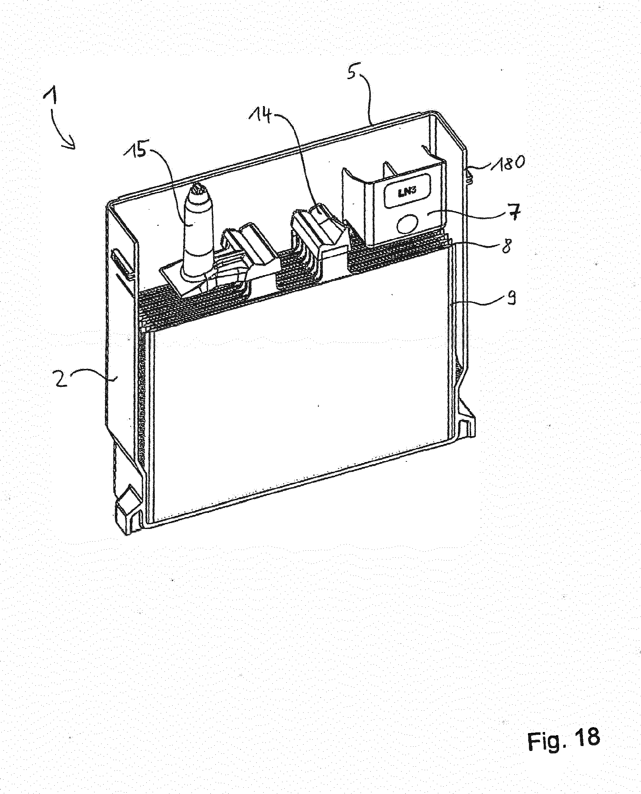

Das Wandelement 7 kann derart in dem Akkumulatorgehäuse 2 angeordnet sein, dass der untere Trennwandabschnitt 10 quer, d. h. zum Beispiel ungefähr senkrecht, zu der Längserstreckung der Elektroden 8 verläuft, betrachtet in einer Ansicht von oben, d.h. vom Deckelteil 13 her. Dies ist beispielsweise in der Figur 2 in Verbindung mit Figur 1 gut erkennbar. Eine vorteilhafte Alternative besteht darin, dass das Wandelement 7 derart angeordnet ist, wie in Figur 18 dargestellt ist. Hierbei verläuft der untere Trennwandabschnitt 10 parallel zu den Elektroden 8. Das Wandelement 7 kann z. B. zwischen einer mit einem Separator 9 versehenen Elektrode 8 und einer Seitenwand 4, 5 oder einer Zwischenwand 6 angeordnet sein. Die Figur 18 zeigt beispielhaft die Anordnung eines Wandelements 7 zwischen einer mit einem Separator 9 versehenen Elektrode 8 und der rechten Seitenwand 5 des Akkumulatorgehäuses 2. Diese Anordnung ist insbesondere in Ackumulatoren für Nutzfahrzeuge (NKW- Akkumulatoren) vorteilhaft vorzusehen, da bei solchen Akkumulatoren die Elektroden 8 nicht quer zur Längsrichtung, d. h. parallel zu den Seitenwänden 4, 5 angeordnet sind, sondern in Längsrichtung des Akkumulatorgehäuses 2, somit etwa senkrecht zu den Seitenwänden 4, 5.

Die Figur 19 zeigt eine vorteilhafte Ausgestaltung eines Wandelements 7, das schmaler ausgebildet ist als die Breite eines Zellraums 3. Zur Fixierung des Wandelements 7 ist ein z. B. neben der Seitenwand 53 angeordnetes Raumfüllelement 190 vorgesehen. Das Raumfüllelement 190 kann auch links von dem Wandelement 7 vorgesehen sein, d. h. angrenzend an die linke Seitenwand 52. Es kann auch an jeder Seite des Wandelements 7 jeweils links und rechts ein Raumfüllelement vorgesehen sein. Die Figur 20 zeigt die Anordnung gemäß Figur 19 in einer Ansicht von oben.

Die Figur 21 zeigt eine vorteilhafte Ausgestaltung eines Wandelements 7, bei dem der untere Trennwandabschnitt 10 schmaler ausgebildet ist als der obere Trennwandabschnitt 12. Entsprechend ist der Abstand zwischen den Seitenwänden 52, 53 größer ist als zwischen den Seitenwänden 50, 51. Die Figur 22 zeigt die Anordnung gemäß Figur 21 von oben. Wie erkennbar ist, werden durch die größere Wandbreite im oberen Bereich des Wandelements 7 überstehende Volumenbereiche 220, 221 des Speicherraums 23 gebildet.

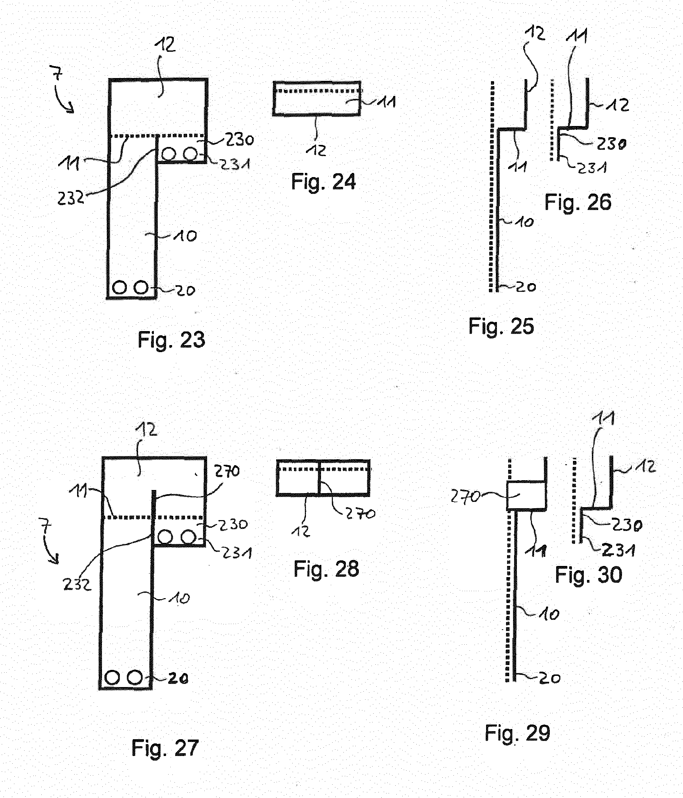

Die Figuren 23 bis 26 zeigen eine vorteilhafte Ausgestaltung eines Wandelements 7, bei dem der Durchgangskanal 22 durch zwei ungleich lange untere Trennwandabschnitte 10, 230 bestimmt wird. Beispielsweise kann ein linker unterer Trennwandabschnitt 10 und ein demgegenüber kürzerer rechter unterer Trennwandabschnitt 230 vorgesehen sein. Zwischen den unteren Trennwandabschnitten 10, 230 kann eine Mittelwand 232 vorgesehen sein. Die Mittelwand 232 kann auch eine oder mehrere Öffnungen aufweisen oder vollständig entfallen. In der Figur 23, die eine Frontansicht des Wandelements 7 zeigt, sind der linke untere Trennwandabschnitt 10 und der rechte untere Trennwandabschnitt 230 etwa mit gleicher Breite ausgebildet. Die Breiten der nebeneinander liegenden unteren Trennwandabschnitte können auch unterschiedlich groß sein. Durch die zwei unteren Trennwandabschnitte werden zwei senkrechte Durchgangskanäle für den Elektrolyten gebildet. Neben den dargestellten zwei Durchgangskanälen können auch noch weitere Durchgangskanäle vorgesehen sein, indem mehrere nebeneinander angeordnete, gleich oder ungleich lange untere Trennwandabschnitte vorgesehen sind. Die Figur 24 zeigt eine Ansicht des Wandelements von oben. Die Figur 25 zeigt eine seitliche Schnittdarstellung durch das Wandelement 7 auf Höhe des linken unteren Trennwandabschnitts 10. Die Figur 26 zeigt einen seitlichen Schnitt durch das Wandelement 7 auf Höhe des rechten unteren Trennwandabschnitts 231.

Im oberen Bereich, d. h. oberhalb des linken unteren Trennwandabschnitts 10 und des rechten unteren Trennwandabschnitts 231 befindet sich der eingangs bereits erwähnte Speicherraum 23, der als gemeinsamer Speicherraum für beide Durchgangskanäle ausgebildet ist. Die Ausgestaltung gemäß den Figuren 23 bis 26 hat den Vorteil, dass eine direkte Mischung von dünnem Elektrolyten aus dem oberen Bereich mit dickem Elektrolyten aus dem unteren Bereich ermöglicht wird. Hierbei kann Elektrolyt in die Speicherraum 23 wahlweise nach unten durch kommunizierende Verbindung 21 oder über die Oberkante des Wandelements 12 herüber in den Volumenraum 25 zurückfließen.

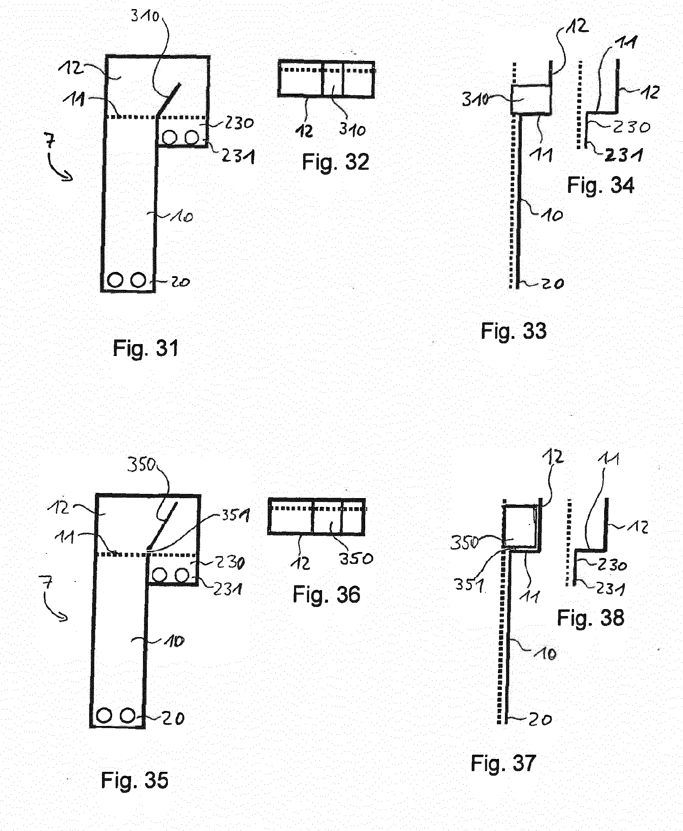

Die Figuren 27 bis 30 zeigen eine vorteilhafte Ausgestaltung eines Wandelements 7, das im Wesentlichen dem Wandelement der Figuren 23 bis 26 entspricht. Hierbei zeigt die Figur 27 wiederum eine Frontansicht, die Figur 28 eine Ansicht von oben und die Figuren 29 und 30 die bereits anhand der Figuren 25 und 26 erläuterten beiden Schnittdarstellungen in unterschiedlichen Ebenen. Im Unterschied zur Ausführungsform gemäß den Figuren 23 bis 26 ist bei der Ausführungsform der Figuren 27 bis 30 ein Mittelsteg 270 vorgesehen, der z. B. in Verlängerung der Mittelwand 232 ausgebildet sein kann und den Speicherraum 23 in zwei Teilkammern unterteilt. Der Mittelsteg 270 kann sich über die volle Höhe des oberen Trennwandelements 12 oder, wie in der Figur 27 dargestellt, nur über einen Teil der Höhe erstrecken. Durch den Mittelsteg 270 kann eine Vermischung des Elektrolyten in Abhängigkeit vom Füllgrad des Speicherraums 23 bzw. vom Neigungswinkel des jeweiligen Zellenraums 3 erfolgen. Hierdurch kann der zuvor beschriebene Effekt der besseren Durchmischung von dünnem Elektrolyten aus dem oberen Bereich des Akkumulators mit dickem Elektrolyten aus dem unteren Bereich weiter optimiert werden. Der Mittelsteg 270 kann, wie z. B. in Figur 27 dargestellt, vertikal in Verlängerung der Mittelwand 232 verlaufen.

Die Figuren 31 bis 34 zeigen in vergleichbaren Darstellungen wie die Figuren 27 bis 30 eine vorteilhafte Ausgestaltung eines Wandelements 7, wobei ein schräg angeordneter Mittelsteg 310 vorgesehen ist. Hierdurch kann z. B. verhindert werden, dass der rechte Teil des Speicherraums 23, der mit dem kurzen Durchgangskanal bzw. dem rechten unteren Trennwandelement 230 verbunden ist, zu einem unerwünscht frühen Zeitpunkt überläuft bzw. überschwappt, bevor der linke Teil des Speicherraums 23, der mit dem langen Durchgangskanal verbunden ist, der einen höheren Strömungswiderstand aufweist als der kurze Durchgangskanal, entsprechend gefüllt ist. Durch einen solchen schräg angeordneten Mittelsteg 310 können somit unterschiedliche Strömungsverhältnisse durch unterschiedlich lange Steigkanäle kompensiert werden.

Eine weitere Ausgestaltung des Mittelstegs besteht darin, dass dieser nicht, wie in den Figuren 27 und 31 dargestellt, direkt an die Mittelwand 232 anschließt, sondern etwas versetzt, z. B. nach rechts in einen Bereich oberhalb des rechten unteren Trennwandabschnitts 230, angeordnet wird und eine beispielsweise waagerecht verlaufende Verbindungswand den Mittelsteg mit der Mittelwand 232 verbindet.

Es sei auch darauf hingewiesen, dass die Begriffe "Mittelsteg" und "Mittelwand" nicht derart zu verstehen sind, dass die entsprechenden Elemente genau in der Mitte angeordnet sein müssen. Auch eine außermittige Anordnung ist erfasst.

Die Figuren 35 bis 38 zeigen eine vorteilhafte Ausgestaltung des Wandelements 7, das im Wesentlichen der Ausgestaltung gemäß den Figuren 31 bis 34 entspricht. Im Unterschied dazu ist der schräg angeordnete Mittelsteg 310 nicht bis an die Mittelwand 232 herangeführt, sondern endet in einem gewissen Abstand dazu oder weist zumindest eine gewisse Öffnung 351 im Übergang zu der Mittelwand 232 auf. Dies hat den Vorteil, dass sich der Speicherraum 23 in Ruhephasen langsam in einen der beiden senkrechten Durchgangskanäle entleert, wobei es besonders vorteilhaft ist, wenn es sich um einen Durchgangskanal mit einer kommunizierenden Verbindung im oberen Bereich des Wandelements 7 handelt, wie z.B. der Durchgangskanal, der in Figur 35 hinter dem rechten unteren Trennwandabschnitt 230 gebildet ist. Die Öffnung 351 kann sich wie dargestellt am unteren Ende des Mittelstegs 310 befinden, oder auch an anderen Stellen bzw. sich über die gesamte Höhe des Mittelstegs 310 erstrecken.

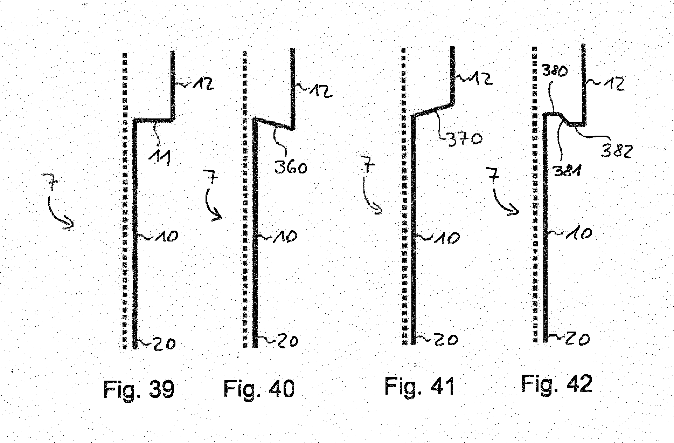

Die Figuren 39 bis 42 zeigen in seitlicher Schnittansicht vorteilhafte Ausgestaltungen des Wandelements 7, wobei Unterschiede in der Ausgestaltung des mittleren Trennwandabschnitts 11 vorgesehen sind. Die Figur 35 zeigt noch einmal stark schematisiert die Ausführung gemäß Figur 5 mit einem waagerecht verlaufenden mittleren Trennwandabschnitt 11. Gemäß Figur 36 ist ein mittlerer Trennwandabschnitt 360 vorgesehen, der in der Art schräg verläuft, dass der obere Trennwandabschnitt 12 mit dem unteren Trennwandabschnitt 10 überlappt. Die Figur 37 zeigt eine Ausgestaltung eines mittleren Trennwandabschnitts 370, der ebenfalls schräg angeordnet ist, jedoch in entgegengesetzter Richtung wie bei Figur 36 dargestellt. Die Figur 38 zeigt einen in drei Abschnitte unterteilten mittleren Trennwandabschnitt 380, 381, 382, wobei ausgehend von dem unteren Trennwandabschnitt 10 sich zunächst ein erster waagerechter mittlerer Trennwandabschnitt 380, dann ein schräger mittlerer Trennwandabschnitt 381 und dann ein zweiter waagerechter mittlerer Trennwandabschnitt 382 anschließt. An den zweiten waagerechten mittleren Trennwandabschnitt 382 schließt sich dann der obere Trennwandabschnitt 12 an. Bei den Ausgestaltungen gemäß Figur 36 und Figur 38 wird durch den mittleren Trennwandabschnitt 360 bzw. 380, 381, 382 ein gefangenes Volumen gebildet, in dem Elektrolyt gehalten wird. Ein Abfluss des Elektrolyten aus dem gefangenen Volumen entsteht erst durch eine entsprechende beschleunigende Bewegung des Akkumulators 1 oder durch Neigung des Akkumulators 1, wie dies z.B. im Fahrbetrieb eines Fahrzeugs auftritt.

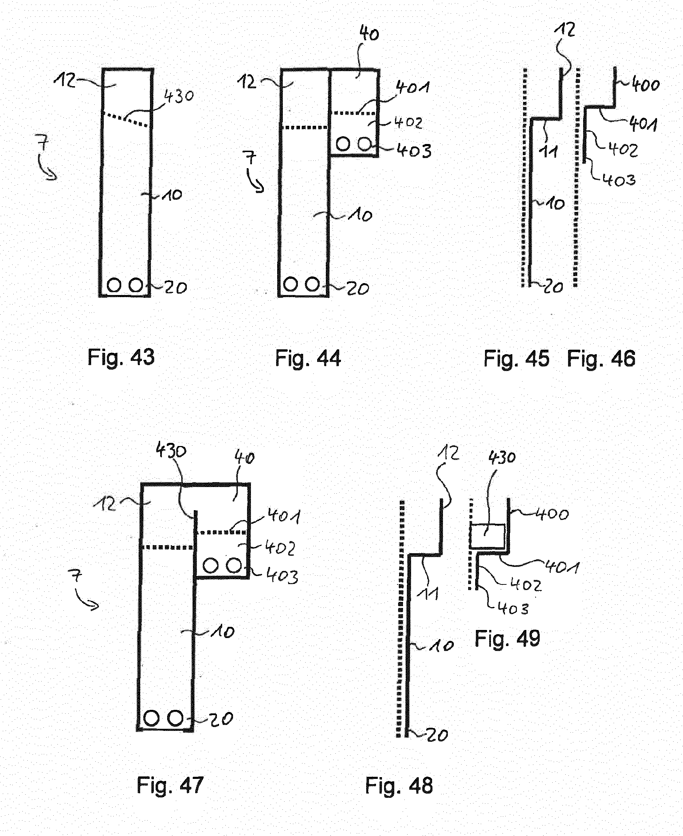

Die Figur 43 zeigt eine vorteilhafte Ausgestaltung eines Wandelements 7, bei dem ein mittlerer Trennwandabschnitt 390 vorgesehen ist, der in Draufsicht auf das Wandelement 7 schräg angeordnet ist.

Die Figuren 44 bis 46 zeigen eine vorteilhafte Ausgestaltung eines Wandelements 7, das vergleichbar wie das Wandelement gemäß den Figuren 23 bis 26 ausgestaltet ist, wobei jedoch im Unterschied dazu in dem linken und dem rechten Durchgangskanal jeweils eigene mittlere Trennwandabschnitte 11, 410 vorgesehen sind, die in unterschiedlichen Höhen in Bezug auf den Boden 18 des Akkumulators 1 angeordnet sind. Hierdurch sind auch jeweilige sich in vertikaler Richtung unterschiedlich lang erstreckende obere Trennwandabschnitte 12, 40 vorgesehen. Die Figur 40 zeigt wieder eine Frontansicht des Wandelements 7, die Figuren 41 und 42 seitliche Schnitte, einmal durch den linken Durchgangskanal (Figur 45) und einmal durch den rechten Durchgangskanal (Figur 46).

Die Figuren 47 bis 49 zeigen eine vorteilhafte Ausgestaltung des Wandelements 7, bei dem, ähnlich wie in Figur 44 dargestellt, eine Stufe im Boden des Speicherraums 23 vorgesehen ist, indem in unterschiedlichen Höhen angeordnete mittlere Trennwandabschnitte 11, 401 vorgesehen sind. Im Unterschied zur Figur 44 ist ein Mittelsteg 430 vorgesehen, der in Ausführung und Funktion einem der anhand der Figuren 27 bis 38 erläuterten Mittelstege 270, 310, 350 entspricht.

Die beschriebenen vorteilhaften Ausführungsformen und Einzelmerkmale des Wandelements können beliebig miteinander kombiniert werden.

## Patentansprüche

1. Akkumulator (1) mit einem Akkumulatorgehäuse (2), das einen Zellraum (3) oder mehrere durch Zwischenwände (6) voneinander abgetrennte Zellräume (3) aufweist, wobei in einem oder mehreren der Zellräume (3) jeweils wenigstens eine positive und eine negative Elektrode (8), getrennt voneinander durch wenigstens einen Separator (9), und flüssiger Elektrolyt vorgesehen ist, und ferner in einem oder mehreren der Zellräume (3) jeweils ein Wandelement (7) vorgesehen ist, das den jeweiligen Zellraum (3) in wenigstens zwei miteinander kommunizierende Volumenräume (22, 23, 25) unterteilt, wobei im unteren Bereich der Volumenräume (22, 23, 25) eine kommunizierende Verbindung (21) zwischen den Volumenräumen für den flüssigen Elektrolyten und im oberen Bereich der Volumenräume (22, 23, 25) eine Druckausgleichsverbindung (24) zwischen den Volumenräumen zur Sicherstellung eines gleichen Luftdrucks in den miteinander kommunizierenden Volumenräumen vorgesehen ist,
wobei das Wandelement (7) als ein in einen Zellraum (3) einsteckbares, separates Bauteil ausgebildet ist, das im beim Einstecken des Wandelements (7) vorangehenden Wandabschnitt einen als Einführschräge (20) ausgebildeten Bereich aufweist, in dem ein an dem beim Einstecken vorangehenden Ende (70) angeordneter Wandabschnitt des Wandelements (7) schräg zu den Elektroden (8) und Separatoren (9) des Zellraums (3) verläuft,
wobei eine oder mehrere Öffnungen (57, 58, 59) im unteren Bereich des Wandelements (7) vorgesehen sind, durch die Elektrolyt zwischen den zwei miteinander kommunizierenden Volumenräumen (22, 23, 25) hin und her strömen kann; und/oder
wobei der die Einführschräge (20) aufweisende Wandabschnitt eine oder mehrere Öffnungen (57, 58, 59) aufweist, durch die Elektrolyt zwischen den zwei miteinander kommunizierenden Volumenräumen (22, 23, 25) hin und her strömen kann; und
wobei eine, mehrere oder alle Öffnungen (57, 58, 59) als Durchbrüche im Wandelement (7) ausgebildet sind, die vom Material des Wandelements (7) umgrenzt sind.

2. Akkumulator nach Anspruch 1,
wobei sich das Wandelement (7) mindestens so weit nach oben erstreckt, dass bei spezifikationsgemäßer Bewegungsbeanspruchung des Akkumulators (1) ein Überfließen von flüssigem Elektrolyten zwischen den zwei miteinander kommunizierenden Volumenräumen (22, 23, 25) über die Oberkante des Wandelements (7) verhindert ist.

3. Akkumulator nach einem der vorhergehenden Ansprüche,
wobei der beim Einstecken des Wandelements (7) vorangehende Wandabschnitt eine gerade oder konvexe Kontur (70) aufweist.

4. Akkumulator nach einem der vorhergehenden Ansprüche,
wobei das Wandelement (7) einen unteren Trennwandabschnitt (10) und einen oberen Trennwandabschnitt (12) sowie einen im Wesentlichen horizontal verlaufenden mittleren Trennwandabschnitt (11) aufweist, der den unteren Trennwandabschnitt (10) mit dem oberen Trennwandabschnitt (12) dicht verbindet, wobei im in den Zellraum (3) eingesteckten Zustand des Wandelements (7) der obere, der mittlere und der untere Trennwandabschnitt (10, 11, 12) eine Trennwand zwischen den zwei miteinander kommunizierenden Volumenräumen (22, 23, 25) bilden.

5. Akkumulator nach einem der vorhergehenden Ansprüche,
wobei das Wandelement (7) mittels einer Steckfestigung lösbar in einem Zellraum (3) befestigbar ist.

6. Akkumulator nach einem der vorhergehenden Ansprüche,
wobei wenigstens ein Wandbereich (50, 51, 52, 53) des Wandelements (7), der zur Anlage an einer Begrenzungswand (17) des Zellraums (3) vorgesehen ist, eine angeformte Dichtlippe (61, 62, 63) zur Abdichtung zwischen den zwei miteinander kommunizierenden Volumenräumen (22, 23, 25) aufweist.

7. Akkumulator nach einem der vorhergehenden Ansprüche,
wobei ein Montagehilfselement (56) im oberen Bereich des Wandelements (7) angeformt ist und zum Greifen des Wandelements (7) durch eine automatische Fertigungseinrichtung ausgebildet ist.

8. Akkumulator nach einem der vorhergehenden Ansprüche,
wobei alle beim Einstecken des Wandelements (7) an den Separatoren (9) entlang gleitenden Kanten des Wandelements (7) abgerundet sind.

9. Akkumulator nach einem der vorhergehenden Ansprüche,
wobei das Wandelement (7) wenigstens einen Trennwandabschnitt (10, 11, 12) aufweist, der sich von einer Begrenzungswand (4, 5, 6) des Zellraums (3) zu einer gegenüberliegenden Begrenzungswand (4, 5, 6) des Zellraums (3) erstreckt und eine Trennwand zwischen den zwei miteinander kommunizierenden Volumenräumen (22, 23, 25) bildet, und das Wandelement (7) Seitenwände (50, 51, 52, 53, 54, 55) aufweist, die im eingesteckten Zustand des Wandelements (7) an den Begrenzungswänden (4, 5, 6) des Zellraums (3) flächig anliegen.

10. Akkumulator nach Anspruch 9,
wobei sich die Längserstreckung der Seitenwände (54, 55) in Längsrichtung (L) des Wandelements (7) von dem Trennwandabschnitt (12) fort verringert.

11. Akkumulator nach einem der vorhergehenden Ansprüche,
wobei das Wandelement wenigstens einen Trennwandabschnitt (10) aufweist, der eine Trennwand zwischen den zwei miteinander kommunizierenden Volumenräumen (22, 23, 25) bildet, und das Wandelement (7) wenigstens im unteren Bereich wenigstens ein angeformtes Abstandshalteelement (50, 51) aufweist, das im eingesteckten Zustand des Wandelements (7) zwischen dem Trennwandabschnitt (10) und einer dem Trennwandabschnitt (10) gegenüberliegenden Begrenzungswand (17) des Zellraums (3) angeordnet ist, wobei durch das Abstandshalteelement (50, 51) im eingesteckten Zustand des Wandelements (7) der Trennwandabschnitt (10) entgegen der auf den Trennwandabschnitt (10) einwirkenden Kraft von über die Elektroden (8) überstehenden Separatoren (9) in einem Abstand von der gegenüberliegenden Begrenzungswand (17) des Zellraums (3) gehalten ist.

12. Wandelement (7) für einen Akkumulator (1) nach einem der vorhergehenden Ansprüche, wobei das Wandelement (7) als ein in einen Zellraum (3) einsteckbares, separates Bauteil ausgebildet ist, das im beim Einstecken des Wandelements (7) vorangehenden Wandabschnitt einen als Einführschräge (20) ausgebildeten Bereich aufweist, in dem ein an dem beim Einstecken vorangehenden Ende (70) angeordneter Wandabschnitt des Wandelements (7) schräg zu den Elektroden (8) und Separatoren (9) des Zellraums (3) verläuft, wobei dass eine oder mehrere Öffnungen (57, 58, 59) im unteren Bereich des Wandelements (7) vorgesehen sind, durch die Elektrolyt zwischen den zwei miteinander kommunizierenden Volumenräumen (22, 23, 25) hin und her strömen kann; und/oder wobei der die Einführschräge (20) aufweisende Wandabschnitt eine oder mehrere Öffnungen (57, 58, 59) aufweist, durch die Elektrolyt zwischen den zwei miteinander kommunizierenden Volumenräumen (22, 23, 25) hin und her strömen kann; und wobei eine, mehrere oder alle Öffnungen (57, 58, 59) als Durchbrüche im Wandelement (7) ausgebildet sind, die vom Material des Wandelements (7) umgrenzt sind.

## Claims

1. Battery (1) having a battery housing (2) that has a cell space (3) or a plurality of cell spaces (3) that are separated from one another by intermediate walls (6), wherein in each case at least one positive and one negative electrode (8), separated from one another by at least one separator (9), and liquid electrolyte are provided in one or more of the cell spaces (3), and a wall element (7) is furthermore in each case provided in one or more of the cell spaces (3) and divides the respective cell space (3) into at least two volume spaces (22, 23, 25) that communicate with one another, wherein, in the lower region of the volume spaces (22, 23, 25), a communicating connection (21) is provided between the volume spaces for the liquid electrolyte and, in the upper region of the volume spaces (22, 23, 25), a pressure equalization connection (24) is provided between the volume spaces in order to ensure the same air pressure in the volume spaces that communicate with one another, wherein the wall element (7) is designed as a separate component able to be inserted into a cell space (3) and that has a region formed as an insertion bevel (20) in the wall section that is in the leading position when the wall element (7) is inserted, in which region a wall section, arranged on the end (70) in the leading position during the insertion, of the wall element (7) runs oblique to the electrodes (8) and separators (9) of the cell space (3),
wherein one or more openings (57, 58, 59) are provided in the lower region of the wall element (7), through which openings the electrolyte is able to flow back and forth between the two volume spaces (22, 23, 25) that communicate with one another; and/or
wherein the wall section having the insertion bevel (20) has one or more openings (57, 58, 59) through which the electrolyte is able to flow back and forth between the two volume spaces (22, 23, 25) that communicate with one another; and
wherein one, several or all of the openings (57, 58, 59) are formed as perforations in the wall element (7) that are surrounded by the material of the wall element (7).

2. Battery according to Claim 1,
wherein the wall element (7) extends at least far enough upwards that, when the battery (1) is subjected to movement in accordance with its specification, an overflow of liquid electrolyte between the two volume spaces (22, 23, 25) that communicate with one another over the upper edge of the wall element (7) is prevented.

3. Battery according to either of the preceding claims,
wherein the wall section that is in the leading position when the wall element (7) is inserted has a straight or convex contour (70).

4. Battery according to one of the preceding claims,
wherein the wall element (7) has a lower partition wall section (10) and an upper partition wall section (12) and a substantially horizontally running central partition wall section (11) that connects the lower partition wall section (10) to the upper partition wall section (12) in a sealtight manner, wherein, in the state in which the wall element (7) is inserted into the cell space (3), the upper, the central and the lower partition wall section (10, 11, 12) form a partition wall between the two volume spaces (22, 23, 25) that communicate with one another.

5. Battery according to one of the preceding claims,
wherein the wall element (7) is able to be attached detachably in a cell space (3) by way of a plug attachment.

6. Battery according to one of the preceding claims,
wherein at least one wall region (50, 51, 52, 53) of the wall element (7) that is intended to bear on a boundary wall (17) of the cell space (3) has a moulded-on sealing lip (61, 62, 63) for sealing between the two volume spaces (22, 23, 25) that communicate with one another.

7. Battery according to one of the preceding claims,
wherein a mounting assistance element (56) is moulded on in the upper region of the wall element (7) and is designed to allow the wall element (7) to be gripped by an automatic manufacturing device.

8. Battery according to one of the preceding claims,
wherein all of the edges of the wall element (7) that slide along the separators (9) when the wall element (7) is inserted are rounded.

9. Battery according to one of the preceding claims,
wherein the wall element (7) has at least one partition wall section (10, 11, 12) that extends from one boundary wall (4, 5, 6) of the cell space (3) to an opposite boundary wall (4, 5, 6) of the cell space (3) and forms a partition wall between the two volume spaces (22, 23, 25) that communicate with one another, and the wall element (7) has side walls (50, 51, 52, 53, 54, 55) that bear flat on the boundary walls (4, 5, 6) of the cell space (3) in the inserted state of the wall element (7).

10. Battery according to Claim 9,
wherein the longitudinal extent of the side walls (54, 55) in the longitudinal direction (L) of the wall element (7) decreases continuously from the partition wall section (12).

11. Battery according to one of the preceding claims,
wherein the wall element has at least one partition wall section (10) that forms a partition wall between the two volume spaces (22, 23, 25) that communicate with one another, and the wall element (7), at least in the lower region, has at least one moulded-on spacer element (50, 51) that is arranged between the partition wall section (10) and a boundary wall (17), opposite the partition wall section (10), of the cell space (3) in the inserted state of the wall element (7), wherein the partition wall section (10) is held counter to the force acting on the partition wall section (10) from separators (9) projecting above the electrodes (8), at a distance from the opposite boundary wall (17) of the cell space (3), by the spacer element (50, 51) in the inserted state of the wall element (7).

12. Wall element (7) for a battery (1) according to one of the preceding claims, wherein the wall element (7) is designed as a separate component able to be inserted into a cell space (3) and that has a region formed as an insertion bevel (20) in the wall section that is in the leading position when the wall element (7) is inserted, in which region a wall section, arranged on the end (70) in the leading position during the insertion, of the wall element (7) runs oblique to the electrodes (8) and separators (9) of the cell space (3), wherein one or more openings (57, 58, 59) are provided in the lower region of the wall element (7), through which openings the electrolyte is able to flow back and forth between the two volume spaces (22, 23, 25) that communicate with one another; and/or wherein the wall section having the insertion bevel (20) has one or more openings (57, 58, 59) through which the electrolyte is able to flow back and forth between the two volume spaces (22, 23, 25) that communicate with one another; and wherein one, several or all of the openings (57, 58, 59) are formed as perforations in the wall element (7) that are surrounded by the material of the wall element (7).

## Revendications

1. Accumulateur (1), comprenant un boîtier d'accumulateur (2) qui présente un logement d'éléments (3) ou plusieurs logements d'éléments séparés les uns des autres par des cloisons intermédiaires (6), dans lequel, dans un ou plusieurs des logements d'éléments (3) respectivement au moins une électrode positive et une négative (8), séparées l'une de l'autre par au moins un séparateur (9), et un électrolyte liquide sont prévus, et en outre, dans un ou plusieurs des logements d'éléments (3), respectivement un élément de paroi (7) est prévu qui divise le logement d'éléments (3) respectif en au moins deux espaces volumétriques (22, 23, 25) communiquant l'un avec l'autre, dans lequel, dans la zone inférieure des espaces volumétriques (22, 23, 25), une liaison de communication (21) entre les espaces volumétriques pour l'électrolyte liquide est prévue, et dans la zone supérieure des espaces volumétriques (22, 23, 25), une liaison d'égalisation de pression (24) entre les espaces volumétriques est prévue pour assurer une pression d'air identique dans les espaces volumétriques communiquant l'un avec l'autre, dans lequel l'élément de paroi (7) est réalisé comme un composant séparé, enfichable dans un logement d'éléments (3), qui présente dans la partie de paroi précédente lors de l'enfichage de l'élément de paroi (7) une zone réalisée sous forme de rampe d'introduction (20) dans laquelle une partie de paroi de l'élément de paroi (7), disposée à une extrémité (70) précédente lors de l'enfichage, s'étend en oblique par rapport aux électrodes (8) et aux séparateurs (9) du logement d'éléments (3),
dans lequel un ou plusieurs orifices (57, 58, 59) sont prévus dans la zone inférieure de l'élément de paroi (7) à travers lesquels l'électrolyte peut circuler en va-et-vient entre les deux espaces volumétriques (22, 23, 25) communiquant l'un avec l'autre ; et/ou
dans lequel la partie de paroi présentant la rampe d'introduction (20) présente un ou plusieurs orifices (57, 58, 59) à travers lesquels l'électrolyte peut circuler en va-et-vient entre les deux espaces volumétriques (22, 23, 25) communiquant l'un avec l'autre ; et
dans lequel un, plusieurs ou tous les orifices (57, 58, 59) sont réalisés comme des ajours dans l'élément de paroi (7) qui sont délimités par la matière de l'élément de paroi (7).

2. Accumulateur selon la revendication 1, dans lequel l'élément de paroi (7) s'étend vers le haut au moins à tel point qu'en cas de contrainte de mouvement selon les spécifications de l'accumulateur (1), un débordement d'électrolyte liquide entre les deux espaces volumétriques (22, 23, 25) communiquant l'un avec l'autre par le bord supérieur de l'élément de paroi (7) est empêché.

3. Accumulateur selon l'une quelconque des revendications précédentes, dans lequel la partie de paroi de l'élément de paroi (7), qui précède lors de l'enfichage, présente un contour (70) droit ou convexe.

4. Accumulateur selon l'une quelconque des revendications précédentes, dans lequel l'élément de paroi (7) présente une partie de paroi de séparation inférieure (10) et une partie de paroi de séparation supérieure (12) ainsi qu'une partie de paroi de séparation centrale (11) s'étendant de manière substantiellement horizontale qui relie de manière étanche la partie de paroi de séparation inférieure (10) à la partie de paroi de séparation supérieure (12), dans lequel, à l'état enfiché dans le logement d'éléments (3) de l'élément de paroi (7), la partie de paroi de séparation (10, 11, 12) supérieure, la partie centrale et la zone inférieure forment une paroi de séparation entre les deux espaces volumétriques (22, 23, 25) communiquant l'un avec l'autre.

5. Accumulateur selon l'une quelconque des revendications précédentes, dans lequel l'élément de paroi (7) peut être fixé de manière amovible dans un logement d'éléments (3) au moyen d'une fixation enfichable.

6. Accumulateur selon l'une quelconque des revendications précédentes, dans lequel au moins une zone de paroi (50, 51, 52, 53) de l'élément de paroi (7), qui est prévue pour s'appuyer contre une paroi de délimitation (17) du logement d'éléments (3), présente une lèvre d'étanchéité rapportée (61, 62, 63) pour l'étanchéité entre les deux espaces volumétriques (22, 23, 25) communiquant l'un avec l'autre.

7. Accumulateur selon l'une quelconque des revendications précédentes, dans lequel un élément auxiliaire de montage (56) est rapporté dans la zone supérieure de l'élément de paroi (7) et est réalisé pour saisir l'élément de paroi (7) par un dispositif de fabrication automatique.

8. Accumulateur selon l'une quelconque des revendications précédentes, dans lequel tous les bords de l'élément de cloison (7) coulissant le long des séparateurs (9) lorsque l'élément de paroi (7) est enfiché sont arrondis.

9. Accumulateur selon l'une quelconque des revendications précédentes, dans lequel l'élément de paroi (7) présente au moins une partie de paroi de séparation (10, 11, 12) qui s'étend depuis une paroi de délimitation (4, 5, 6) du logement d'éléments (3) jusqu'à une paroi de délimitation opposée (4, 5, 6) du logement d'éléments (3) et forme une paroi de séparation entre les deux espaces volumétriques (22, 23, 25) communiquant l'un avec l'autre, et l'élément de paroi (7) présente des parois latérales (50, 51, 52, 53, 54, 55) qui s'appuient sur toute la surface contre les parois de délimitation (4, 5, 6) du logement d'éléments (3) à l'état enfiché de l'élément de paroi (7) .

10. Accumulateur selon la revendication 9, dans lequel l'étendue longitudinale des parois latérales (54, 55) diminue en s'éloignant dans la direction longitudinale (L) de l'élément de paroi (7) à partir de la partie de paroi de séparation (12).

11. Accumulateur selon l'une quelconque des revendications précédentes, dans lequel l'élément de paroi présente au moins une partie de paroi de séparation (10) qui forme une paroi de séparation entre les deux espaces volumétriques (22, 23, 25) communiquant l'un avec l'autre, et l'élément de paroi (7) présente au moins dans la zone inférieure au moins un élément d'espacement rapporté (50, 51) qui, à l'état enfiché de l'élément de paroi (7), est disposé entre la partie de paroi de séparation (10) et une paroi de délimitation (17) du logement d'éléments (3), opposée à la partie de paroi de séparation (10), dans lequel l'élément d'espacement (50, 51), à l'état enfiché de l'élément de paroi (7), maintient la partie de paroi de séparation (10), contre la force agissant sur la partie de paroi de séparation (10) des séparateurs (9) dépassant des électrodes (8), à une distance de la paroi de délimitation (17) opposée du logement d'éléments (3).

12. Elément de cloison (7) pour un accumulateur (1) selon l'une quelconque des revendications précédentes, dans lequel l'élément de paroi (7) est réalisé comme un composant séparé, enfichable dans un logement d'éléments (3), qui présente dans la partie de paroi précédente lors de l'enfichage de l'élément de paroi (7) une zone réalisée sous forme de rampe d'introduction (20) dans laquelle une partie de paroi de l'élément de paroi (7), disposée à une extrémité (70) précédente lors de l'enfichage, s'étend en oblique par rapport aux électrodes (8) et aux séparateurs (9) du logement d'éléments (3), dans lequel un ou plusieurs orifices (57, 58, 59) sont prévus dans la zone inférieure de l'élément de paroi (7) à travers lesquels l'électrolyte peut circuler en va-et-vient entre les deux espaces volumétriques (22, 23, 25) communiquant l'un avec l'autre ; et/ou dans lequel la partie de paroi présentant la rampe d'introduction (20) présente un ou plusieurs orifices (57, 58, 59) à travers lesquels l'électrolyte peut circuler en va-et-vient entre les deux espaces volumétriques (22, 23, 25) communiquant l'un avec l'autre ; et dans lequel un, plusieurs ou tous les orifices (57, 58, 59) sont réalisés comme des ajours dans l'élément de paroi (7) qui sont délimités par la matière de l'élément de paroi (7) .
